# FASCICULE DE BREVET EUROPEEN

(11) **EP 4 113 051 B1**
(45) Date de publication et mention de la délivrance du brevet: **11.09.2024**
(21) Numéro de dépôt: 22182301.6
(22) Date de dépôt: 30.06.2022
(51) Int. Cl.: F28F 13/18

(54) **ECHANGEUR THERMIQUE D'UNE MACHINE A ABSORPTION**
WÄRMETAUSCHER EINER ABSORPTIONSMASCHINE
HEAT EXCHANGER FOR AN ABSORPTION MACHINE

(30) Priorité: 01.07.2021 FR 2107147
(43) Date de publication de la demande: 04.01.2023
(73) Titulaire: Commissariat à l'énergie atomique et aux énergies alternatives, 75015 Paris (FR)
(72) Inventeur: PHAN, Hai Trieu, 38054 GRENOBLE cedex 09 (FR); PONCELET, Olivier, 38054 GRENOBLE cedex 09 (FR)
(74) Mandataire: Brevalex

(56) Documents cités:
- WO-A1-2010/030015
- WO-A1-2017/150353
- WO-A1-98/05269
- JP-A- H06 123 577
- US-A1- 2016 131 444

## Description

### DOMAINE TECHNIQUE

La présente invention se rapporte au domaine général des systèmes thermodynamiques avec cycle à absorption.

L'invention concerne un échangeur thermique pour une machine à absorption selon le préambule de la revendication 1. Le document US 2016/0131444-A1 s'intéresse, lui aussi, à un échangeur thermique.

L'invention concerne également une machine à absorption comprenant un ou plusieurs échangeurs thermiques.

L'invention concerne également un procédé de traitement de surface d'un échangeur thermique pour améliorer les performances d'un échangeur thermique d'une machine à absorption.

L'invention trouve des applications dans de nombreux domaines industriels, et notamment pour la fabrication d'absorbeur et/ou de générateur de machine à absorption.

L'invention est particulièrement intéressante puisqu'elle permet de meilleures efficacités de transferts de masse et de chaleur lors des processus d'absorption et de désorption, améliorant ainsi la performance globale du cycle.

### ÉTAT DE LA TECHNIQUE ANTÉRIEURE

Actuellement, la valorisation de la chaleur industrielle et l'optimisation des consommations provenant du résidentiel sont essentielles pour assurer la transition écologique. Les politiques énergétiques actuelles soulignent l'importance de la gestion des échanges thermiques (froids ou chauds), dans les immeubles, les industries et même dans les zones urbaines.

Les systèmes thermodynamiques avec cycle à absorption permettent par exemple de produire du froid à partir d'une source chaude (circuit frigorifique) ou encore d'obtenir une pompe à chaleur. Ces machine à absorption sont intéressantes car elles utilisent comme source de la chaleur à moyenne/haute température, provenant du solaire ou résultant comme rejet d'un procédé industriel, au lieu de l'énergie électrique, qui est une source est précieuse et coûteuse.

Par exemple, il est possible de coupler une machine à absorption avec des systèmes solaires thermiques, des réseaux de chaleur, des usines industrielles voire même des générateurs électriques turbo-gaz de grosse puissance.

Les machines à absorption sont des systèmes connus et couramment utilisés. Ils utilisent deux fluides : un réfrigérant et un absorbant. On peut notamment citer les couples de fluide suivants : H₂O/LiBr et NH₃/H₂O.

La machine à absorption comporte plusieurs échangeurs thermiques :
- l'absorbeur où la vapeur du réfrigérant est absorbée dans la solution pauvre par une réaction exothermique à basse pression,
- le générateur où la vapeur réfrigérant est générée à partir de la solution riche par une réaction endothermique à haute pression.

L'efficacité du système à absorption dépend de plusieurs paramètres. En particulier, les transferts de masse et de chaleur doivent être maximisés.

Des mécanismes d'écoulement à films ruisselants le long d'un échangeur (à plaque ou tube) sont ainsi couramment utilisés pour pouvoir contrôler les écoulements. Par exemple, la thèse de Delphine Triché intitulée « Étude numérique et expérimentale des transferts couplés de masse et de chaleur dans l'absorbeur d'une machine à absorption ammoniac-eau », Université Grenoble Alpes, 2016, décrit l'utilisation d'échangeur à plaques pour un absorbeur et un générateur d'une machine à absorption NH₃/H₂O. Pour l'absorbeur, la solution pauvre en NH₃ est distribuée le long des plaques dans le but de former des films ruisselants. La vapeur rentre dans l'absorbeur pour ensuite être absorbée tout le long de l'échangeur à travers une réaction exothermique dont la chaleur est transférée au fluide caloporteur circulant en contre-courant.

Dans FR 3 108 711, la technologie d'échangeur à films ruisselants a été utilisée pour combiner dans un seul composant la génération de vapeur d'ammoniac et sa rectification. La rectification permet d'améliorer la qualité du réfrigérant en éliminant la majeure partie de l'absorbant contenu dans la phase gazeuse.

Cependant, même avec de tels dispositifs, les efficacités de transferts de masse et de chaleur lors des processus d'absorption et de désorption sont toujours insuffisantes, ce qui diminue la performance globale du cycle.

### EXPOSÉ DE L'INVENTION

Un but de la présente invention est de proposer un échangeur thermique d'une machine à absorption remédiant aux inconvénients de l'art antérieur et notamment présentant une bonne performance globale.

Pour cela, la présente invention propose un échangeur thermique selon la revendication 1

Les molécules de la couche inférieure sont liées de manière covalente aux molécules de la couche intermédiaire et les molécules de la couche intermédiaire sont liées de manière covalente aux molécules de la couche supérieure.

Ce revêtement va rendre les surfaces d'échange des échangeurs très mouillantes. Par très mouillante, on entend que lorsqu'on pose une goutte du fluide sur la surface traitée, cette goute va s'étaler comme un film. La super-mouillabilité de surface va permettre une distribution plus uniforme du fluide de travail en phase liquide (tel que le couple de fluide NH₃/H₂O pour une machine à absorption NH₃/H₂O) sur la surface d'échange, améliorant ainsi les transferts de masse et de chaleur lors des processus d'absorption et de désorption. La performance globale du cycle est améliorée par rapport aux dispositifs de l'art antérieur.

De plus, un tel revêtement évite, localement, les phénomènes de piquage lors du fonctionnement de l'échangeur thermique.

Le caractère hydrophile du matériau peut être évalué par la mesure de l'angle de contact de l'eau sur la surface du matériau. Par « angle de contact », on entend l'angle entre la tangente à une goutte au point de contact et la surface du matériau. Une goutte d'eau déposée à la surface d'un matériau hydrophile présentera donc un angle de contact très faible contrairement à une goutte d'eau déposée à la surface d'un matériau hydrophobe qui présentera un angle de goutte très élevé.

Avantageusement, l'angle de contact d'une goutte d'eau sur le revêtement hydrophile est inférieur ou égal à 70°, de préférence inférieur ou égal à 60° et encore plus préférentiellement, inférieur ou égal à 30°.

Le revêtement hydrophile est très stable chimiquement (jusqu'à 250°C) et peut durer toute la vie de l'échangeur thermique.

Avantageusement, l'échangeur thermique est un évaporateur, un absorbeur, un générateur, un rectifieur ou un condenseur.

Avantageusement, la paroi métallique est en acier, en acier inoxydable, en argent, en cuivre ou en aluminium. On choisira de préférence de l'acier inoxydable.

Selon une première variante de réalisation avantageuse, le revêtement hydrophile comprend successivement une couche inférieure d'un dérivé de phosphonate ayant au moins un groupement OH, une première couche intermédiaire de molécules comprenant un groupement alcoxysilane et un groupement amine, une deuxième couche intermédiaire de molécules ayant un ou plusieurs plusieurs groupements isocyanate (par exemple deux : il s'agit dans ce cas d'un diisocyanate), une couche supérieure de molécules ayant au moins une amine primaire. De préférence, la couche supérieure est une couche de polyéthylèneimine (PEI).

L'utilisation de molécules ayant plusieurs groupements isocyanate (deux notamment) est particulièrement intéressante. En effet, à cause de l'encombrement stérique, toutes les fonctions isocyanates d'une même molécule ne pourront pas réagir avec la couche sous-jacente, et il en restera donc toujours au moins une pour réagir avec la couche supérieure, et notamment avec les amines primaires de la couche supérieure.

Avantageusement, selon cette première variante, le revêtement hydrophile comprend successivement une couche inférieure de 3-(Trihydroxysilyl)propyl méthylphosphonate de sodium, une première couche intermédiaire de 3-aminopropyltriéthoxysilane (APTES), une deuxième couche intermédiaire d'un diisocyanate, par exemple de formule OCN(CH₂)₂NCO, et une couche supérieure de molécules ayant au moins une amine primaire.

De préférence, la couche supérieure est une couche de polyéthylèneimine (PEI).

Selon une deuxième variante de réalisation avantageuse, le revêtement hydrophile comprend successivement une couche inférieure de phosphonate ayant au moins un groupement OH, une première couche intermédiaire de molécules comprenant un groupement alcoxysilane ('alkoxysilane' ou agent de couplage silane) et un groupement isocyanate, une couche supérieure de molécules ayant au moins une amine primaire. De préférence, la couche supérieure est une couche de polyéthylèneimine.

Selon une troisième variante de réalisation avantageuse, le revêtement hydrophile comprend successivement une couche inférieure d'un dérivé de catéchol, de préférence une dopamine, une première couche intermédiaire de molécules comprenant un ou plusieurs groupements isocyanate (par exemple deux), une couche supérieure de molécules ayant au moins une amine primaire, par une couche supérieure de polyéthylèneimine. Par exemple, le revêtement hydrophile comprend successivement une couche inférieure de dopamine, une première couche intermédiaire d'un diisocyanate, par exemple de formule OCN(CH₂)₂NCO, une couche supérieure de polyéthylèneimine.

L'invention concerne également une machine à absorption pour la production de froid comprenant un ou plusieurs échangeurs thermiques tels que définis précédemment.

En particulier, la machine à absorption comprend un absorbeur, un générateur, un condenseur, un évaporateur, éventuellement, un rectifieur, et un circuit fluidique d'absorption apte à recevoir une solution de travail comprenant un fluide frigorigène et un absorbant, le circuit fluidique reliant le générateur au condenseur (le cas échéant via le rectifieur), le condenseur à l'évaporateur, l'évaporateur à l'absorbeur et l'absorbeur au générateur.

L'invention concerne également un procédé pour améliorer les performances d'un système thermodynamique avec cycle à absorption. Le procédé de traitement de surface d'un échangeur thermique comprend les étapes définies dans la revendication 11.

Le procédé de traitement est, avantageusement, appliqué sur la paroi de l'échangeur thermique avant son assemblage.

Un tel procédé peut être mis en oeuvre par voie liquide. Il est ainsi facile à mettre en oeuvre. De telles méthodes de greffage sont aisément transférables à l'échelle industrielle, même pour des géométries complexes.

Alternativement, il est possible de mettre en oeuvre le procédé pour renouveler le revêtement d'un échangeur, ou rajeunir un échangeur existant.

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
La figure 1 représente de manière schématique le fonctionnement d'une machine à absorption selon un mode de réalisation particulier de l'invention.
La figure 2 représente de manière schématique et en coupe la paroi d'un échangeur thermique recouverte par un revêtement hydrophile en contact avec un fluide de travail d'une part et par un fluide caloporteur d'autre part, selon un mode de réalisation particulier de l'invention.
La figure 3A représente de manière schématique et en coupe la paroi d'un échangeur thermique sur laquelle on a posé une goutte de fluide de travail.
La figure 3B représente de manière schématique et en coupe la paroi d'un échangeur thermique recouverte par un revêtement hydrophile selon un mode de réalisation particulier de l'invention, sur lequel on a posé une goutte de fluide de travail,
Les figures 4 à 7 représentent de manière schématique une paroi d'un échangeur thermique recouverte par une couche inférieure d'un revêtement hydrophile selon différents modes de réalisation de l'invention.
La figure 8 représente de manière schématique la réaction d'une couche inférieure d'un revêtement hydrophile comprenant une fonction isocyanate sur une paroi d'un échangeur thermique pouvant réagir avec de l'eau pour former une fonction amine, selon un mode de réalisation non défini par l'invention.
La figure 9 représente de manière schématique la réaction d'une couche inférieure d'un revêtement hydrophile comprenant une fonction isocyanate sur une paroi d'un échangeur thermique avec un aminosilane, selon un mode de réalisation non défini par l'invention.
La figure 10 représente de manière schématique la réaction d'une couche inférieure d'un revêtement hydrophile comprenant une fonction isocyanate sur une paroi d'un échangeur thermique avec un composé hydroxylé comprenant une amine primaire, selon un autre mode de réalisation non défini par l'invention,
La figure 11 représente de manière schématique la réaction d'une couche inférieure d'un revêtement hydrophile comprenant une fonction isocyanate sur une paroi d'un échangeur thermique avec un composé comprenant une amine primaire, selon un autre mode de réalisation particulier.
La figure 12 représente de manière schématique la réaction d'une couche inférieure d'un revêtement hydrophile comprenant des fonctions alcool sur une paroi d'un échangeur thermique avec de l'APTES (aminosilane), selon un autre mode de réalisation non défini par l'invention.
La figure 13 représente de manière schématique la réaction d'une couche intermédiaire d'un revêtement hydrophile comprenant des amines primaires sur une paroi d'un échangeur thermique avec le glutaraldéhyde, selon un autre mode de réalisation non défini par l'invention.
Les figures 14A, 14B, 14C et 14D représentent de manière schématique différentes étapes d'un procédé de traitement d'une surface d'un échangeur thermique, selon un mode de réalisation particulier de l'invention.
Les figures 15A, 15B et 15C représentent de manière schématique différentes étapes d'un procédé de traitement d'une surface d'un échangeur thermique, selon un autre mode de réalisation particulier de l'invention.
Les figures 16A, 16B et 16C représentent de manière schématique différentes étapes d'un procédé de traitement d'une surface d'un échangeur thermique, selon un autre mode de réalisation particulier de l'invention.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

L'invention concerne particulièrement les échangeurs thermiques d'une machine à absorption, notamment les échangeurs à films ruisselants, comme le générateur, le rectifieur, le condenseur, l'absorbeur et l'évaporateur.

Néanmoins, l'invention est également transposable aux domaines suivants :
- à la production de froid à partir de sources de chaleur à moyenne et basse températures (entre 30°C à 100°C) : rejets thermiques par des procédés industriels, solaire thermique, biomasse, géothermie, turbines à gaz, réseaux de chaleur ;
- au transport sur moteurs à essence, diesel et turbine à gaz, transport maritime ;
- aux pompes à chaleur par machine à absorption ;
- aux échangeurs de type bouilleur.

L'échangeur thermique 100 est, de préférence, un échangeur diphasique. Par la suite on décrira, plus particulièrement, un système thermique à cycle à absorption fonctionnant avec le couple de fluides de travail NH₃/H₂O, mais il pourrait également s'agir du couple H₂O/LiBr.

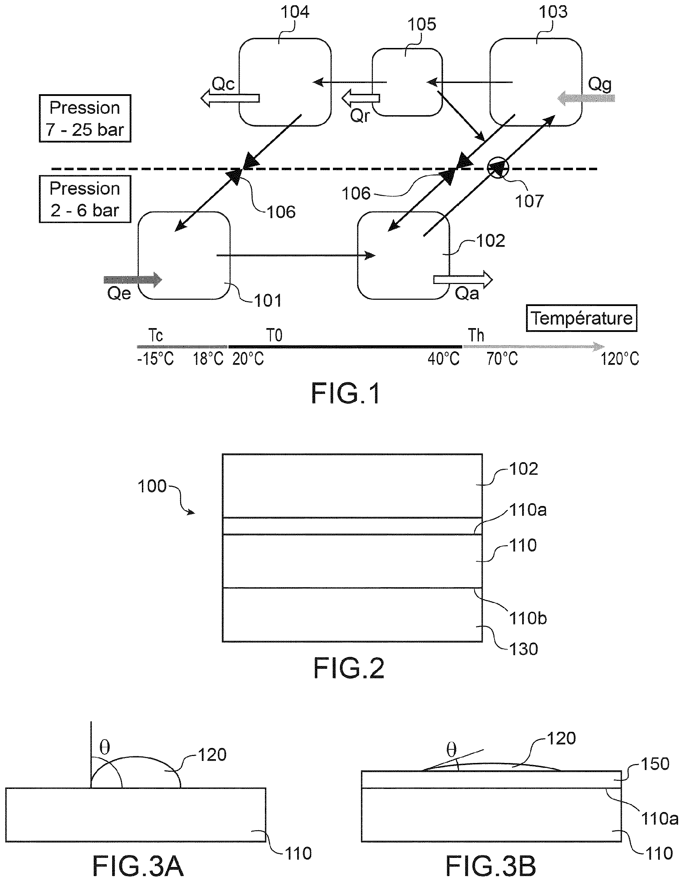

Nous allons maintenant décrire plus en détail une machine à absorption en faisant référence à la figure 1. La machine à absorption comprend quatre échangeurs thermiques 100 principaux (échangeurs de chaleur et de masse) : l'évaporateur 101, l'absorbeur 102, le générateur 103 et le condenseur 104 (figure 1). Un rectifieur 105 peut être ajouté afin d'améliorer les performances de la machine.

Des valves d'expansion 106 et/ou des pompes 107 peuvent également être utilisées pour réguler la pression dans chaque échangeur thermique et dans les tuyaux du système. La machine à absorption peut comprendre également des vannes d'expansion et/ou des pompes

Le réfrigérant (ici de l'ammoniac presque pur) en phase liquide pénètre dans l'évaporateur 101, où un fluide caloporteur froid circule. Le réfrigérant prend la chaleur de la source froide pour s'évaporer, ce qui induit la production de froid de la machine d'absorption (Qe). Dans ce composant, la pression est faible et un apport de chaleur à basse température est nécessaire pour permettre l'évaporation du frigorigène.

L'absorbeur 102 est configuré pour condenser la vapeur de fluide frigorigène issue de l'évaporateur. À son entrée, l'absorbant, solution composée d'eau et d'une faible fraction de réfrigérant, est pompé et distribué le long de l'absorbeur. La solution faible absorbe la vapeur de réfrigérant qui provient de l'évaporateur 101 et devient une solution enrichie, proche de sa condition saturée. La solution riche va au générateur 103. Le processus d'absorption se produit à basse pression, libérant une quantité de chaleur (Qa) dans l'air ambiant (ou dans un circuit de refroidissement).

L'absorbeur 102 est connecté fluidiquement à l'évaporateur 101 et au générateur 103.

Le générateur 103 est configuré pour vaporiser le fluide frigorigène. La solution riche provenant de l'absorbeur 102 est chauffée par un fluide caloporteur à haute température qui traverse le générateur. Grâce à cette chaleur, la solution riche désorbe la vapeur de frigorigène, devient à nouveau une solution faible, et retourne à l'absorbeur 102. Le processus de désorption a lieu à haute pression, et requiert une quantité de chaleur (Qg). La vapeur de frigorigène est ensuite acheminée vers le condenseur 104, de préférence via le rectifieur 105.

Le générateur 103 est en connexion fluidique avec le condenseur 104.

Le condenseur 104 est configuré pour condenser la vapeur de fluide frigorigène. La vapeur de réfrigérant générée est refroidie par l'air ambiant ou par un fluide externe pour se condenser et devenir à nouveau liquide. Le frigorigène liquide passe par une vanne de dilatation 106 pour diminuer sa pression avant de pénétrer dans l'évaporateur 101. La condensation nécessite une haute pression et libère une quantité de chaleur (Qc).

Avantageusement, un rectifieur 105 est positionné entre le générateur 103 et le condenseur 104. Le rectifieur 105 permet de purifier la vapeur de fluide frigorigène avant son arrivée dans le condenseur 104. En particulier pour les machines à absorption ammoniac eau, l'utilisation d'un rectifieur 105 permet d'éliminer une partie des traces de vapeur d'eau restant dans la vapeur d'ammoniac à la sortie du générateur 103. La condensation partielle de la vapeur d'eau restante dans la vapeur d'ammoniac se fait à haute pression et libère une quantité de chaleur (Qr). Les condensats retournent dans la solution faible tandis que la vapeur purifiée se dirige vers le condenseur 104.

Les échangeurs thermiques 100 de la machine à absorption comprennent au moins une paroi métallique 110.

La paroi métallique 110 peut être en acier, en acier inoxydable, en argent, en cuivre ou en aluminium. Notamment, on choisira de l'aluminium, de l'acier ou de l'acier inoxydable.

La paroi métallique 110 a par exemple une épaisseur de l'ordre du millimètre. L'épaisseur est choisie en fonction des contraintes mécaniques.

La paroi métallique 110 comprend une première surface 110a et une deuxième surface 110b (figure 2). La première surface 110a est destinée à être en contact avec le fluide de travail 120. La deuxième surface 110b peut être destinée à être en contact avec un fluide caloporteur 130.

Au moins la première surface 110a de la paroi 110 est recouverte, partiellement voire totalement, par le revêtement hydrophile 150 (figure 2).

La deuxième surface 110b de la paroi peut également être recouverte par un revêtement hydrophile identique ou différent du revêtement métallique recouvrant la première surface 110a.

Le revêtement hydrophile 150 améliore le caractère hydrophile de la paroi métallique. Le caractère hydrophile ou hydrophobe d'une surface peut être caractérisé par son angle de goutte θ. Notamment, la paroi sans revêtement présente un angle de goutte supérieur à 70°C et de préférence supérieure à 90°C (figure 3A).

L'angle de contact θ d'une goutte d'eau sur le revêtement hydrophile 150 est inférieur ou égal à 70°, de préférence inférieur ou égal à 60° et encore plus préférentiellement, inférieur ou égal à 30° (figure 3B). Le revêtement 150 permet de rendre la paroi très mouillante avec le fluide de travail, c'est-à-dire, lorsqu'on pose une goutte du fluide sur la surface traitée, cette goute va s'étaler comme un film.

Avant de former le revêtement hydrophile 150 sur la paroi 110, on réalise, avantageusement, un traitement pour dégraisser et/ou décaper la paroi métallique. Cette étape permet de retirer les corps gras (par exemple le silicone) pouvant être présent à la surface de la paroi de l'échangeur thermique et/ou d'avoir un maximum de groupement - OH à la surface de la paroi 110 et ainsi d'améliorer l'accroche de la couche inférieure du revêtement 150. Par exemple, pour un échangeur en acier inoxydable on pourra utiliser une solution piranha. On peut également utiliser un solvant organique, notamment un solvant chloré tel que le trichloroéthylène.

Le revêtement hydrophile 150 est formé d'au moins deux couches de molécules organiques : une couche dite inférieure en contact avec la paroi 110, et plus particulièrement avec la première surface 110a de la paroi 110, et une couche dite supérieure en contact avec le fluide de travail 120 de l'échangeur thermique 100.

Le revêtement hydrophile 150 peut comprendre, en outre, une ou plusieurs couches intermédiaires (ou couches additionnelles) liées de manière covalente à la couche inférieure et à la couche supérieure. De préférence, le revêtement hydrophile 150 comprend une ou deux couches intermédiaires.

La couche inférieure est greffée sur la paroi 110. Elle assure la stabilité mécanique du revêtement 150. Elle est formée de molécules organiques comprenant un ou plusieurs groupes fonctionnels (molécules dites multidentes) pouvant être greffées à la surface 110a de la paroi 110 et un autre groupe fonctionnel (par exemple un groupement amine, isocyanate ou alcool) pouvant former une liaison covalente avec la couche supérieure ou avec une couche intermédiaire.

De manière très avantageuse, on choisira des molécules comprennent deux groupes fonctionnels (molécule bidente) ou trois groupes fonctionnels pouvant se greffer sur la surface de la paroi. Ceci assure un meilleur greffage et améliore la stabilité mécanique du revêtement 150.

Avantageusement, les molécules organiques de la couche inférieure sont des composés organophosphorés, en particulier des dérivés d'acide phosphonique ou de phosphonate, des dérivés d'alcoxysilane ou d'un catéchol fonctionnel (aussi parfois appelé dopamine ou 4-(2-aminoethyl)benzène-1,2-diol).

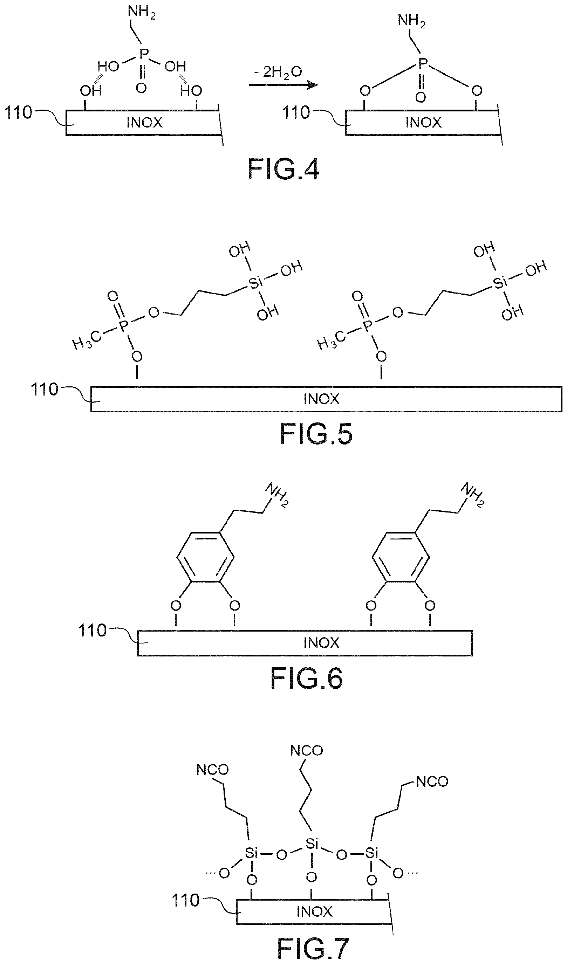

Le dérivé d'acide phosphonique est, par exemple, un dérivé de type ester ou amide. Le groupe PO(OH)₂ du dérivé d'acide phosphonique se conduit comme un bidente et se fixe aux liaisonx -OH présentes à la surface de la paroi métallique 110 (figure 4), ce qui confère une grande stabilité à la couche inférieure. De préférence, on choisira un dérivé phosphonique portant sur la chaîne alkyle une fonction réactive, de préférence une amine. On peut choisir par exemple : NH₂(CH₂)₂PO(OH)₂ (acide (Aminoéthyl)phosphonique), NH₂(CH₂)₃PO(OH)₂ (acide Aminopropyl)phosphonique), NH₂(CH₂)₄PO(OH)₂ (acide (Aminobutyl)phosphonique) ou NH₂PO(OEt)₂ (Diéthylphosphoramidate).

De préférence, le dérivé de phosphonate comprend un groupe -OH, par exemple il peut porter un groupement Si(OH)₃ (figure 5). Le dépôt est, avantageusement, réalisé en milieu acide. Le milieu acide permet de 'reprotoner' du groupe phosphonique de l'espèce chimique, notamment dans le cas d'un sel de sodium.

De préférence, le dérivé de catéchol comprend une fonction amine. On choisira par exemple la dopamine (figure 6).

Le dérivé d'alcoxysilane a, de préférence, pour formule (OR)₃Si(CH₂)ₙX avec X une fonction organique réactive, R un groupement alkyle (par exemple Me ou Et) et n un entier, de préférence n est égal à 2 ou 3. Le dérivé d'alcoxysilane porte, de préférence, une fonction isocyanate (figure 7). Un tel composé a, par exemple pour formule NCO(CH₂)ₙSi(OR)₃ avec R un groupement alkyle (par exemple Me ou Et) et n un entier, de préférence n est égal à 2 ou 3. On choisira, avantageusement, n=3 pour éviter de faire une beta-élimination lors de la purification du produit. Le groupe alcoxyde est choisi en fonction de la vitesse d'hydrolyse souhaitée. A titre illustratif, le composé OCN(CH₂)₃Si(OMe)₃ est sept fois plus sensible à l'hydrolyse que le composé OCN(CH₂)₃Si(OEt)₃.

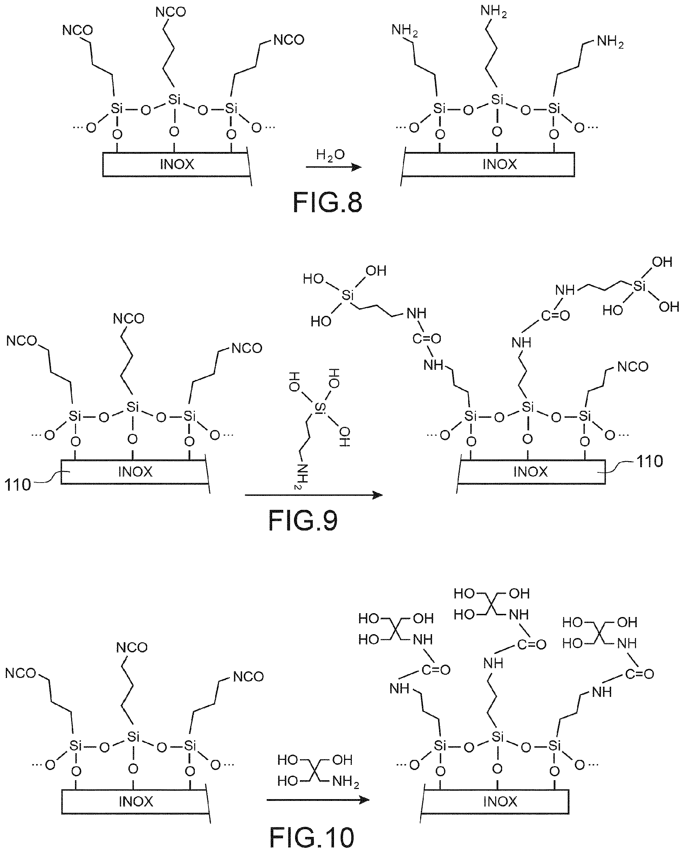

Le greffage de cette couche inférieure sur la paroi métallique 110 est, avantageusement, réalisée dans un solvant organique aprotique (acétone, THF, toluène). Il est possible de former une amine primaire par hydrolyse de la fonction isocyanate (figure 8).

Avantageusement, au moins une des couches du revêtement comprend des molécules avec des groupements aminés pendants, notamment des amines primaires, et au moins une autre couche du revêtement comprend des molécules avec des fonctions aldéhydes ou isocyanates. Les amines primaires peuvent réagir avec les aldéhydes ou les isocyanates sans avoir besoin de catalyseur et à basse température. Les molécules qui vont réagir avec une couche de molécules ayant une fonction isocyanate sont, avantageusement, solubilisées dans un solvant aprotique polaire (acétone ou THF par exemple).

On pourra choisir par exemple un isocyanate ou un diisocyanate.

Dans le cas d'un composé avec des amines secondaires, on pourra utiliser un catalyseur pour faciliter la réaction.

Selon une variante avantageuse, le revêtement comprend au moins une couche intermédiaire de molécules comprenant plusieurs groupements isocyanate. De préférence, le revêtement comprend au moins une couche intermédiaire de diisocyanate. De préférence, le diisocyanate a pour formule OCN(CH₂)ₙNCO.

Avantageusement, la réaction avec le diisocyanate se fait dans une solution de dichlorométhane (CH₂Cl₂).

D'autres isocyanates peuvent être utilisés, par exemple, un de ceux de la liste suivante : m-tolylidène diisocyanate, 4-méthyl-m-phénylène diisocyanate, hexaméthylène diisocyanate, 2-méthyl-m-phénylène diisocyanate, 3,3'-diméthylbiphényl-4,4'-diyl diisocyanate, 4,4'-méthylènediphényl diisocyanate, o-(p-isocyanatobenzyl)phényl isocyanate, 2,2'-méthylènediphényl diisocyanate, 1,3-bis(1-isocyanato-1-méthyléthyl) benzène, 1,5-naphthylène diisocyanate, 1,3-bis(isocyanatométhyl)benzène, 3-isocyanatométhyl-3,5,5-triméthylcyclohexyl isocyanate, 4,4'-méthylènedicyclohexyl diisocyanate, 2,4,6-triisopropyl-m-phénylène diisocyanate.

La couche supérieure est en contact avec le fluide de travail 120. Elle assure le caractère hydrophile du revêtement 150. Elle est formée de molécules organiques comprenant un ou plusieurs groupes fonctionnels hydrophiles pendants. On choisira de préférence des molécules ayant des groupes fonctionnels non hydrolysables (i.e. des molécules inertes par rapport au fluide de travail 120 notamment). De préférence, il s'agit de groupes fonctionnels alcool, acide faible ou amine.

Par exemple, la couche supérieure est formée de molécules comportant des amines primaires, par exemple un PEI linéaire ou ramifié. On choisira, de préférence, des polyéthylèneimines ramifiés qui portent de nombreuses fonctions amines primaires.

La couche supérieure peut également comporter des groupements alcoxysilane Si(OR) pouvant être hydrolysés sous forme de Si(OH), par exemple de l'APTES. La silice mouille bien l'ammoniaque.

Nous allons maintenant décrire plus en détail des variantes de réalisation en faisant référence aux figures 9 à 13 (ces variantes de réalisation ne font pas partie de l'invention mais sont utiles à la compréhension de l'invention).

Selon une première variante de réalisation, la couche inférieure comprend une fonction isocyanate. Cette fonction est très réactive. Elle réagira très facilement avec des molécules organiques hydroxylées. On choisira de préférence des molécules organiques hydroxylées portant des groupes amine primaire pour former ainsi un revêtement hydrophile 150 de deux couches moléculaires (figures 9, 10 et 11). La réaction d'une amine primaire sur un isocyanate conduit à la formation d'une urée très stable thermiquement. Cette réaction ne nécessite pas de catalyseurs. Toutes ces fonctions augmentent le caractère hydrophile du revêtement 150.

Avantageusement, les réactions avec une molécule ayant une fonction isocyanate sont réalisées à l'abri de la lumière, en particulier les réactions avec une molécule aromatique ayant une fonction isocyanate.

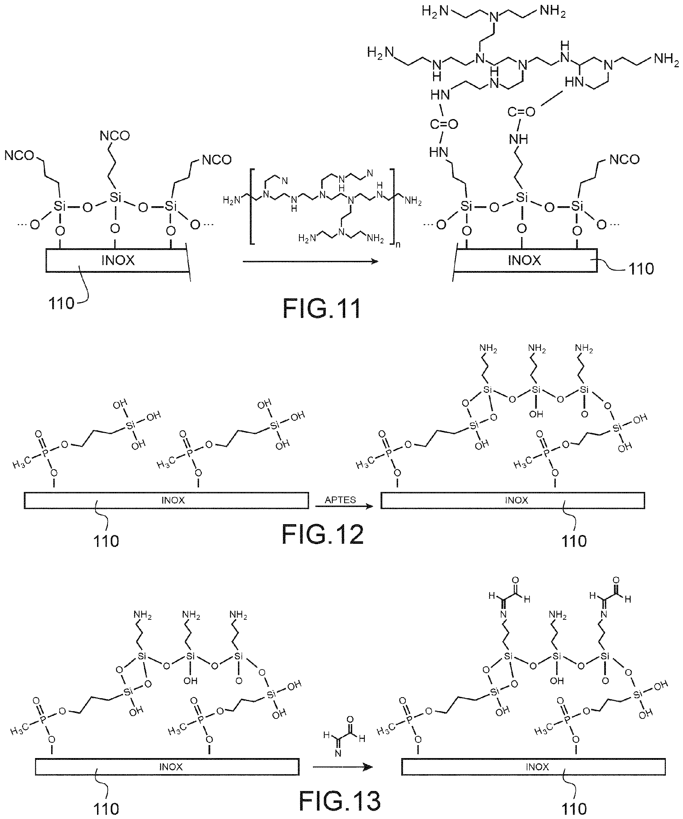

Selon une autre variante de réalisation, la couche inférieure comprend une fonction alcool, par exemple des groupes Si(OH)₃. Une telle fonction peut réagir avec un alcoxysilane. On choisira avantageusement un alcoxysilane portant une fonction amine primaire pour former ainsi un revêtement hydrophile 150 de deux couches moléculaires. On choisira par exemple un aminoalcoxysilane tel que (OR)₃Si(CH₂)₂NH₂ (figure 12).

Il est possible de former une imine, sans catalyseur et à basse température, en faisant réagir une amine primaire avec des fonctions aldéhyde ou cétone.

Par exemple, comme représenté sur la figure 13, la première couche peut comporter des amines primaires. Ces amines primaires peuvent réagir avec un aldéhyde ou une cétone. On choisit, par exemple et comme représenté sur la figure 13, le glutaraldéhyde pour former une couche intermédiaire. Avantageusement, on réalise la réaction en milieu acide. La fonction aldéhyde pendante pourra ensuite réagir avec toute molécule portant une amine pour former une fonction imine. Par exemple, elle peut réagir avec des molécules organiques polyhydroxylés portants une fonction amine primaire et formant ainsi la dernière couche du revêtement 150. Par exemple, on peut utiliser l'aminopropylsilane triol ou tris(hydroxymethyl)aminomethane.

### Exemples illustratifs et non limitatifs d'un mode de réalisation :

Dans les différents exemples qui vont suivre, les revêtements hydrophiles sont formés sur une paroi en acier inoxydable. Avant l'étape de greffage, l'acier inoxydable est préalablement dégraisser avec une solution piranha.

Une goutte est déposée sur l'acier inoxydable. L'angle de goutte est de 90,2° (valeur moyenne obtenue sur 6 mesures).

### Exemple I :

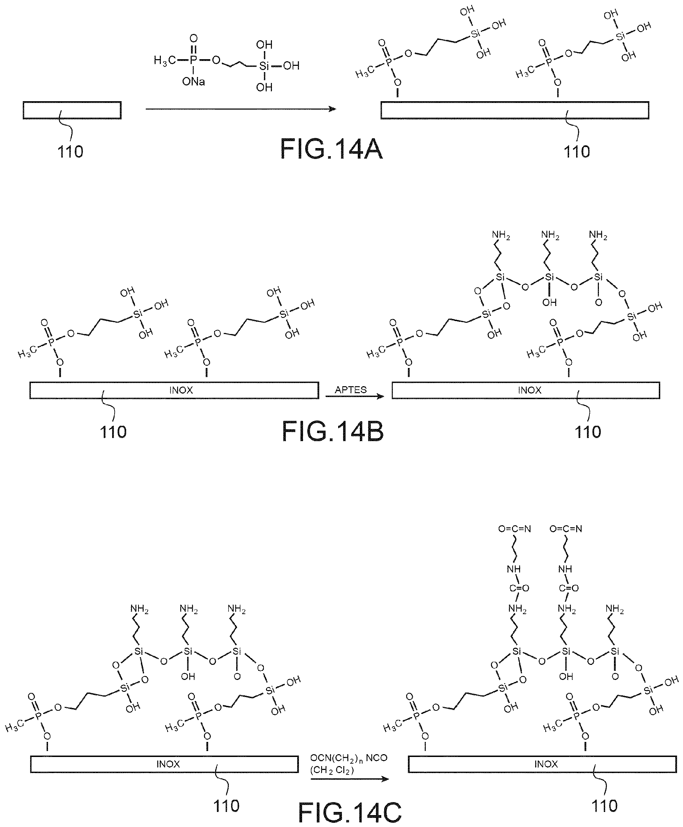

Dans ce premier exemple, la couche inférieure du revêtement hydrophile est formée d'un composé phosphoré et notamment un dérivé de phosphonate portant une fonction Si(OH)₃. En particulier, il s'agit du 3-(Trihydroxysilyl)propyl méthylphosphonate de sodium (figure 14A).

Ce composé est greffé sur l'acier inoxydable en milieu acide (pH ....). Puis, on ajoute un agent de couplage silane portant une fonction amine primaire tel (OR)₃Si(CH₂)₂NH₂. En particulier, on choisit le 3-Aminopropyltriéthoxysilane aussi dénommé APTES (figure 14B). On forme ainsi une première couche intermédiaire.

Puis, on forme une deuxième couche intermédiaire en faisant réagir des molécules ayant fonction isocyanate avec les molécules de la première couche intermédiaire. On choisit par exemple un diisocyanate (de formule (OCN(CH₂)₂NCO) dans du dichlorométhane (CH₂Cl₂)) (figure 14C). La réaction de l'amine primaire et de l'isocyanate conduit à la formation d'une urée très stable thermiquement. Cette réaction ne nécessite pas de catalyseurs.

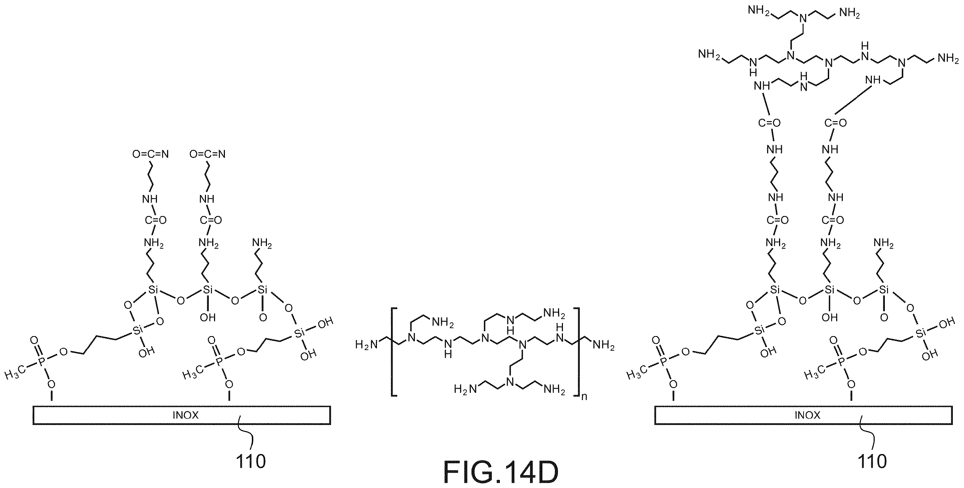

Finalement, on ajoute un polyéthylèneimine ramifié (PEI) pour former la couche supérieure du revêtement final (figure 14D).

Une goutte déposée sur ce premier revêtement de l'acier inoxydable présente un angle de goutte de 12,7° (valeur moyenne obtenue sur 4 mesures).

Avec ce premier revêtement, l'affinité de la pièce en acier inoxydable envers l'eau est fortement améliorée (plus l'angle de mouillage est faible, plus le substrat est mouillant de l'eau).

### Exemple Il :

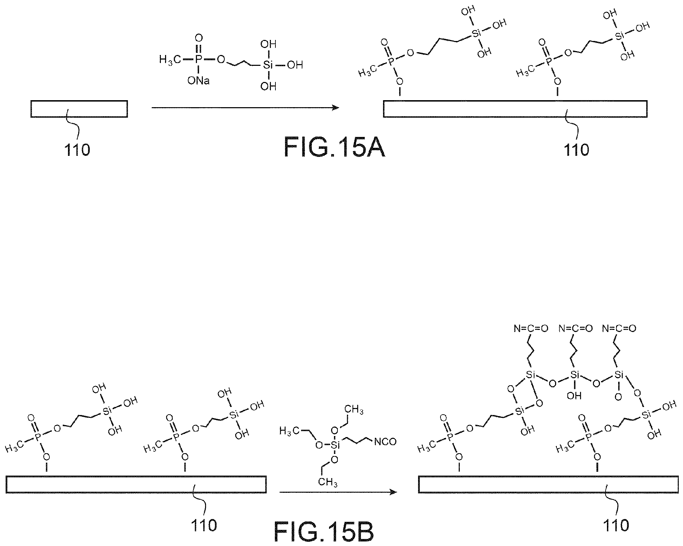

Dans ce deuxième exemple, la couche inférieure du revêtement hydrophile est formée d'un composé phosphoré et notamment d'un dérivé de phosphonate portant une fonction Si(OH)₃. En particulier, il s'agit du 3-(Trihydroxysilyl)propyl méthylphosphonate de sodium (figure 15A).

Ce composé est greffé sur l'acier inoxydable en milieu acide (pH ....). Puis, on ajoute un agent de couplage. On choisit par exemple un alcoxyde de silicium portant une fonction isocyanate tel que le 3-(Triéthoxysilyl)propyl isocyanate de formule (RO)₃Si(CH₂)ₙNCO avec, de préférence, R=Me ou Et et n = 2 ou 3 (figure 15B). On forme ainsi une couche intermédiaire.

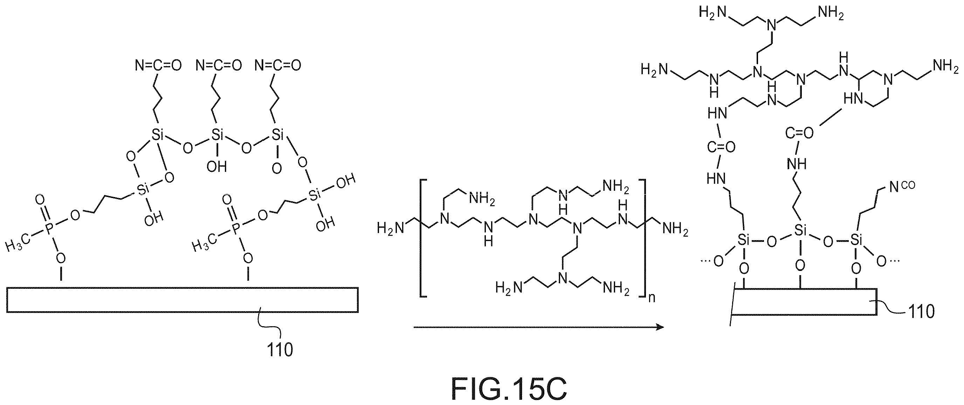

Finalement, on ajoute un agent de couplage silane portant une fonction amine primaire. En particulier, on choisit un PEI ramifié pour former la couche supérieure du revêtement (figure 15C).

Une goutte déposée sur ce deuxième revêtement de l'acier inoxydable présente un angle de goutte de 65,2° (valeur moyenne obtenue sur 6 mesures).

Avec ce deuxième revêtement, l'affinité de la pièce en acier inoxydable envers l'eau est améliorée (plus l'angle de goutte est faible, plus le substrat est mouillant de l'eau). Le fort encombrement stérique du deuxième revêtement peut expliquer que l'angle de goutte est plus important que l'angle de goutte obtenu avec le premier revêtement. Il est également possible que des fonctions isocyanate sont consommées et transformées en NH₂, limitant ainsi le nombre de point d'ancrage pour le greffage du PEI.

Ces deux revêtements sont stables jusqu'à des températures de 250°C voire même supérieures à 250°C.

### Exemple III :

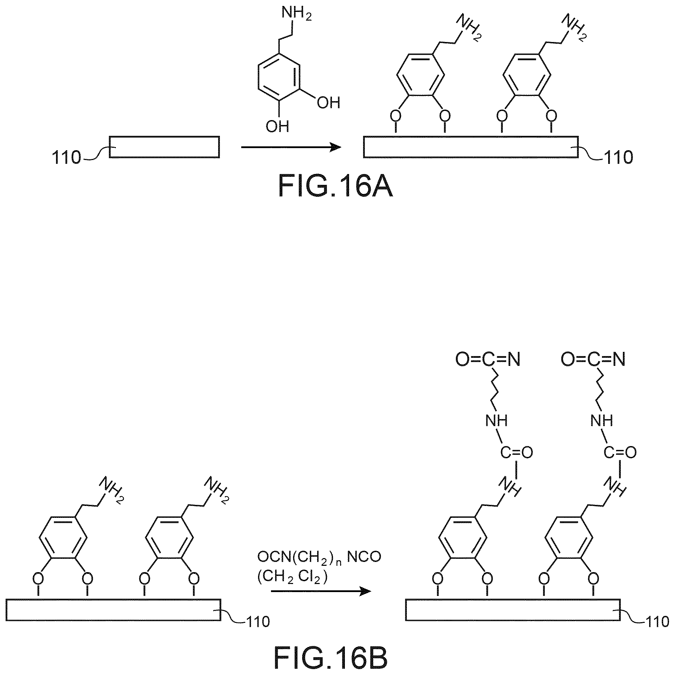

Dans ce troisième exemple, on greffe sur l'acier inoxydable un dérivé de catéchol, ici une dopamine hydrochloride ((HO)₂C₆H₃CH₂CH₂NH₂·HCl à 0,01M dans l'eau dé-ionisée) (figure 16A). Cette réaction de greffage est réalisée à l'abri de la lumière.

La mesure de l'angle de goutte (20°) confirme le caractère hydrophile déjà obtenu pour la couche inférieure du revêtement.

Après un lavage à la soude (0,01M) puis à l'eau, on réalise deux bains de trempage dans un mélange d'acétone anhydre et de CH₂Cl₂. Ces opérations sont réalisées à l'abri de la lumière.

Puis on ajoute une molécule comprenant au moins une fonction isocyanate. On choisit par exemple un diisocyanate (de formule (OCN(CH₂)₂NCO) dans du dichlorométhane (CH₂Cl₂)) qui va réagir avec les amines primaires de la dopamine pour former une couche intermédiaire figure 16B).

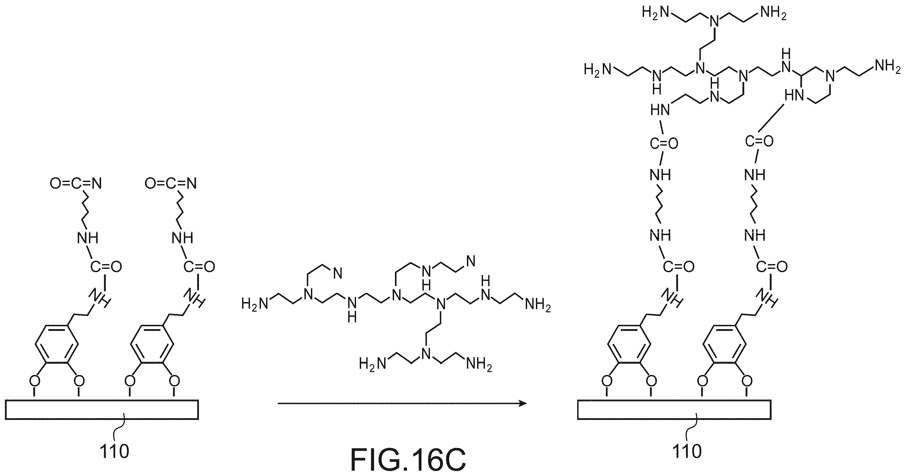

Finalement, un PEI ramifié est ajouté. Celui-ci se lie de manière covalente avec les amines primaires de la couche intermédiaire pour former ainsi la couche supérieure du revêtement (figure 16C).

La mesure de l'angle de goutte (12°) confirme le caractère très hydrophile du revêtement.

La formation de polydopamine ayant un caractère hydrophile/hydrophobe est évitée. Le motif catéchol se fixe sur l'acier inoxydable via les fonctions OH.

## Revendications

1. Echangeur thermique (100), pour une machine à absorption, comprenant une paroi métallique (110), destinée à être en contact avec un fluide de travail (120) circulant dans l'échangeur thermique (100),
dans lequel la paroi (110) est recouverte par un revêtement hydrophile (150) comprenant :
- une couche inférieure de molécules organiques choisies parmi un dérivé d'acide phosphonique, un dérivé de phosphonate, un dérivé d'alcoxysilane ou un dérivé de catéchol, la couche inférieure étant greffée sur la paroi métallique,
- une ou plusieurs couches intermédiaires, au moins une des couches intermédiaires ayant un ou plusieurs groupements isocyanate,
- une couche supérieure de molécules organique, comprenant un groupe hydrophile pendant, la couche supérieure étant liée de manière covalente à la couche inférieure de molécules, par l'intermédiaire de la ou des plusieurs couches intermédiaires, **caractérisé par** la couche supérieure de molécules organiques ayant au moins une amine primaire.

2. Echangeur thermique selon la revendication 1, **caractérisé en ce que** l'échangeur thermique (100) est un évaporateur, un absorbeur, un générateur, un rectifieur ou un condenseur.

3. Echangeur selon l'une quelconque des revendications précédentes, **caractérisé en ce que** la paroi métallique (110) est en acier, en acier inoxydable, en argent, en cuivre ou en aluminium.

4. Echangeur selon l'une quelconque des revendications 1 à 3, **caractérisé en ce que** le revêtement hydrophile (150) comprend successivement une couche inférieure d'un dérivé de phosphonate ayant au moins un groupement OH, une première couche intermédiaire de molécules comprenant un groupement alcoxysilane et un groupement amine, une deuxième couche intermédiaire de molécules ayant un ou plusieurs groupements isocyanate, une couche supérieure de molécules ayant au moins une amine primaire.

5. Echangeur selon la revendication précédente, **caractérisé en ce que** le revêtement hydrophile (150) comprend successivement une couche inférieure de 3-(Trihydroxysilyl)propyl méthylphosphonate, une première couche intermédiaire d'APTES, une deuxième couche intermédiaire d'un diisocyanate, par exemple de formule OCN(CH₂)₂NCO, une couche supérieure de molécules ayant au moins une amine primaire, par exemple une couche de polyéthylèneimine.

6. Echangeur selon l'une quelconque des revendications 1 à 3, **caractérisé en ce que** le revêtement hydrophile (150) comprend successivement une couche inférieure de phosphonate ayant au moins un groupement OH, une première couche intermédiaire de molécules comprenant un groupement alcoxysilane et un groupement isocyanate, une couche supérieure de molécules ayant au moins une amine primaire.

7. Echangeur selon l'une quelconque des revendications 1 à 3, **caractérisé en ce que** le revêtement hydrophile (150) comprend successivement une couche inférieure d'un dérivé de catéchol, une première couche intermédiaire de molécules comprenant un ou plusieurs groupements isocyanate, une couche supérieure de molécules ayant au moins une amine primaire.

8. Echangeur selon la revendication précédente, **caractérisé en ce que** le revêtement hydrophile (150) comprend successivement une couche inférieure de dopamine, une première couche intermédiaire d'un diisocyanate, par exemple de formule OCN(CH₂)₂NCO, une couche supérieure de polyéthylèneimine.

9. Echangeur selon l'une quelconque des revendications 1 à 7, **caractérisé en ce que** la couche supérieure est une couche de polyéthylèneimine.

10. Machine à absorption comprenant un ou plusieurs échangeurs thermiques selon l'une quelconque des revendications 1 à 9.

11. Procédé de traitement de surface d'un échangeur thermique (100) comprenant les étapes suivantes :
i) fournir un échangeur thermique (100) ayant une paroi métallique (110), destinée à être en contact avec un fluide (120) circulant dans l'échangeur thermique (100),
ii) avantageusement, dégraisser la paroi métallique (110),
iii) former un revêtement hydrophile (150) sur la paroi métallique (110), le revêtement hydrophile (150) comprenant :
- une couche inférieure de molécules organiques choisies parmi un dérivé d'acide phosphonique, un dérivé de phosphonate, un dérivé d'alcoxysilane ou un dérivé de catéchol, la couche inférieure étant greffée sur la paroi métallique,
- une ou plusieurs couches intermédiaires, au moins une des couches intermédiaires ayant un ou plusieurs groupements isocyanate,
- une couche supérieure de molécules organique, comprenant un groupe hydrophile pendant, la couche supérieure de molécules organiques ayant au moins une amine primaire, la couche supérieure étant liée de manière covalente à la couche inférieure de molécules, par l'intermédiaire de la ou des plusieurs couches intermédiaires.

## Patentansprüche

1. Wärmeaustauscher (100) für eine Absorptionsmaschine, der eine Metallwand (110) umfasst, die dazu bestimmt ist, mit einem im Wärmeaustauscher (100) zirkulierenden Arbeitsfluid (120) in Kontakt zu sein,
wobei die Wand (110) mit einer hydrophilen Beschichtung (150) überzogen ist, die Folgendes umfasst:
- eine untere Schicht aus organischen Molekülen, die aus einem Phosphonsäurederivat, einem Phosphonatderivat, einem Alkoxysilanderivat oder einem Katecholderivat ausgewählt ist, wobei die untere Schicht auf die Metallwand aufgepfropft ist,
- eine oder mehrere Zwischenschichten, wobei mindestens eine der Zwischenschichten eine oder mehrere Isocyanatgruppen aufweist,
- eine obere Schicht aus organischen Molekülen, die eine hydrophile Seitengruppe umfasst, wobei die obere Schicht über die eine oder mehreren Zwischenschichten kovalent mit der unteren Schicht aus Molekülen verbunden ist, **dadurch gekennzeichnet, dass** die obere Schicht aus organischen Molekülen mindestens ein primäres Amin aufweist.

2. Wärmeaustauscher nach Anspruch 1, **dadurch gekennzeichnet, dass** der Wärmeaustauscher (100) ein Verdampfer, ein Absorber, ein Generator, ein Gleichrichter oder ein Kondensator ist.

3. Austauscher nach einem der vorhergehenden Ansprüche, **dadurch gekennzeichnet, dass** die Metallwand (110) aus Stahl, Edelstahl, Silber, Kupfer oder Aluminium ist.

4. Austauscher nach einem der Ansprüche 1 bis 3, **dadurch gekennzeichnet, dass** die hydrophile Beschichtung (150) nacheinander eine untere Schicht aus einem Phosphonatderivat, die mindestens eine OH-Gruppe aufweist, eine erste Zwischenschicht aus Molekülen, die eine Alkoxysilangruppe und eine Amingruppe umfasst, eine zweite Zwischenschicht aus Molekülen, die eine oder mehrere Isocyanatgruppen aufweist, und eine obere Schicht aus Molekülen, die mindestens ein primäres Amin aufweist, umfasst.

5. Austauscher nach dem vorhergehenden Anspruch, **dadurch gekennzeichnet, dass** die hydrophile Beschichtung (150) nacheinander eine untere Schicht aus 3-(Trihydroxysilyl)propylmethylphosphonat, eine erste Zwischenschicht aus APTES, eine zweite Zwischenschicht aus einem Diisocyanat, zum Beispiel der Formel OCN(CH₂)₂NCO, und eine obere Schicht aus Molekülen, die mindestens ein primäres Amin aufweist, zum Beispiel eine Schicht aus Polyethylenimin, umfasst.

6. Austauscher nach einem der Ansprüche 1 bis 3, **dadurch gekennzeichnet, dass** die hydrophile Beschichtung (150) nacheinander eine untere Schicht aus Phosphonat, die mindestens eine OH-Gruppe aufweist, eine erste Zwischenschicht aus Molekülen, die eine Alkoxysilangruppe und eine Isocyanatgruppe umfasst, und eine obere Schicht aus Molekülen, die mindestens ein primäres Amin aufweist, umfasst.

7. Austauscher nach einem der Ansprüche 1 bis 3, **dadurch gekennzeichnet, dass** die hydrophile Beschichtung (150) nacheinander eine untere Schicht aus einem Katecholderivat, eine erste Zwischenschicht aus Molekülen, die eine oder mehrere Isocyanatgruppen umfasst, und eine obere Schicht aus Molekülen, die mindestens ein primäres Amin aufweist, umfasst.

8. Austauscher nach dem vorhergehenden Anspruch, **dadurch gekennzeichnet, dass** die hydrophile Beschichtung (150) nacheinander eine untere Schicht aus Dopamin, eine erste Zwischenschicht aus einem Diisocyanat, zum Beispiel der Formel OCN(CH₂)₂NCO, und eine obere Schicht aus Polyethylenimin umfasst.

9. Austauscher nach einem der Ansprüche 1 bis 7, **dadurch gekennzeichnet, dass** die obere Schicht eine Schicht aus Polyethylenimin ist.

10. Absorptionsmaschine, die einen oder mehrere Wärmeaustauscher nach einem der Ansprüche 1 bis 9 umfasst.

11. Verfahren zum Behandeln der Oberfläche eines Wärmeaustauschers (100), das die folgenden Schritte umfasst:
i) Bereitstellen eines Wärmeaustauschers (100), der eine Metallwand (110) aufweist, die dazu bestimmt ist, mit einem im Wärmeaustauscher (100) zirkulierenden Fluid (120) in Kontakt zu sein,
ii) vorteilhafterweise Entfetten der Metallwand (110),
iii) Bilden einer hydrophilen Beschichtung (150) auf der Metallwand (110), wobei die hydrophile Beschichtung (150) Folgendes umfasst:
- eine untere Schicht aus organischen Molekülen, die aus einem Phosphonsäurederivat, einem Phosphonatderivat, einem Alkoxysilanderivat oder einem Katecholderivat ausgewählt ist, wobei die untere Schicht auf die Metallwand aufgepfropft ist,
- eine oder mehrere Zwischenschichten, wobei mindestens eine der Zwischenschichten eine oder mehrere Isocyanatgruppen aufweist,
- eine obere Schicht aus organischen Molekülen, die eine hydrophile Seitengruppe umfasst, wobei die obere Schicht aus organischen Molekülen mindestens ein primäres Amin aufweist, wobei die obere Schicht über die eine oder mehreren Zwischenschichten kovalent mit der unteren Schicht aus Molekülen verbunden ist.

## Claims

1. A heat exchanger (100), for an absorption machine, comprising a metal wall (110), intended to be in contact with a working fluid (120) circulating in the heat exchanger (100),
wherein the wall (110) is covered by a hydrophilic coating (150) comprising:
- a lower layer of organic molecules selected from a phosphonic acid derivative, a phosphonate derivative, an alkoxysilane derivative or a catechol derivative, the lower layer being grafted onto the metal wall,
- one or more intermediate layers, at least one of the intermediate layers having one or more isocyanate groups,
- an upper layer of organic molecules, comprising a pendant hydrophilic group,
the upper layer being covalently bonded to the lower layer of molecules, via the one or more intermediate layers, **characterised by** the upper layer of organic molecules having at least one primary amine.

2. The heat exchanger according to claim 1, **characterised in that** the heat exchanger (100) is an evaporator, an absorber, a generator, a rectifier or a condenser.

3. The exchanger according to any one of the preceding claims, **characterised in that** the metal wall (110) is made of steel, stainless steel, silver, copper or aluminium.

4. The exchanger according to any one of claims 1 to 3, **characterised in that** the hydrophilic coating (150) successively comprises a lower layer of a phosphonate derivative having at least one OH group, a first intermediate layer of molecules comprising an alkoxysilane group and an amine group, a second intermediate layer of molecules having one or more isocyanate groups, an upper layer of molecules having at least one primary amine.

5. The exchanger according to the preceding claim, **characterised in that** the hydrophilic coating (150) successively comprises a lower layer of 3-(Trihydroxysilyl)propyl methylphosphonate, a first intermediate layer of APTES, a second intermediate layer of a diisocyanate, for example of formula OCN(CH₂)₂NCO, an upper layer of molecules having at least one primary amine, for example a layer of polyethyleneimine.

6. The exchanger according to any one of claims 1 to 3, **characterised in that** the hydrophilic coating (150) successively comprises a lower layer of phosphonate having at least one OH group, a first intermediate layer of molecules comprising an alkoxysilane group and an isocyanate group, an upper layer of molecules having at least one primary amine.

7. The exchanger according to any one of claims 1 to 3, **characterised in that** the hydrophilic coating (150) successively comprises a lower layer of a catechol derivative, a first intermediate layer of molecules comprising one or more isocyanate groups, an upper layer of molecules having at least one primary amine.

8. The exchanger according to the preceding claim, **characterised in that** the hydrophilic coating (150) successively comprises a lower layer of dopamine, a first intermediate layer of a diisocyanate, for example of formula OCN(CH₂)₂NCO, an upper layer of polyethyleneimine.

9. The exchanger according to any one of claims 1 to 7, **characterised in that** the upper layer is a layer of polyethyleneimine.

10. An absorption machine comprising one or more heat exchangers according to any one of claims 1 to 9.

11. A method for treating the surface of a heat exchanger (100) comprising the following steps:
i) providing a heat exchanger (100) having a metal wall (110), intended to be in contact with a fluid (120) circulating in the heat exchanger (100),
ii) advantageously, degreasing the metal wall (110),
iii) forming a hydrophilic coating (150) on the metal wall (110), the hydrophilic coating (150) comprising:
- a lower layer of organic molecules selected from a phosphonic acid derivative, a phosphonate derivative, an alkoxysilane derivative or a catechol derivative, the lower layer being grafted onto the metal wall,
- one or more intermediate layers, at least one of the intermediate layers having one or more isocyanate groups,
- an upper layer of organic molecules, comprising a pendant hydrophilic group, the upper layer of organic molecules having at least one primary amine, the upper layer being covalently bonded to the lower layer of molecules, via the one or more intermediate layers.
